# EUROPEAN PATENT SPECIFICATION

(11) **EP 4 336 641 B1**
(45) Date of publication and mention of the grant of the patent: **25.06.2025**
(21) Application number: 23191671.9
(22) Date of filing: 16.08.2023
(51) Int. Cl.: H01M 50/30, H01M 50/103, H01M 50/15, H01M 50/342, H01M 50/375, H01M 50/572, H01M 50/593

(54) **ELECTROCHEMICAL DEVICE AND ELECTRONIC DEVICE**
ELEKTROCHEMISCHE VORRICHTUNG UND ELEKTRONISCHE VORRICHTUNG
DISPOSITIF ÉLECTROCHIMIQUE ET DISPOSITIF ÉLECTRONIQUE

(30) Priority: 16.08.2022 CN 202210977936
(43) Date of publication of application: 13.03.2024
(73) Proprietor: Ningde Amperex Technology Ltd., Ningde City, Fujian 352100 (CN)
(72) Inventor: ZHANG, Guowen, Ningde City, 352100 (CN)
(74) Representative: Icosa

(56) References cited:
- CN-A- 114 175 371
- CN-A- 114 759 319
- CN-C- 1 236 507

## Description

### TECHNICAL FIELD

This application relates to the technical field of electrochemical devices, and in particular, to an electrochemical device and an electronic device.

### BACKGROUND

When a battery (electrochemical device) is in use, thermal runaway may occur and result in an increase in the internal pressure in a housing of the battery, thereby causing the battery housing to expand and even causing problems such as battery explosion. To alleviate the increase in the internal pressure of the battery, a conventional method is to create a pressure relief groove or a pressure relief hole on the battery housing by laser drilling, and dispose a pressure relief valve at the pressure relief groove or pressure relief hole. The laser drilling operation is cumbersome, and impairs production efficiency of the battery. In addition, due to the existence of the pressure relief valve, the material cost is increased, and a relatively large workspace needs to be reserved for opening the valve, thereby impairing the energy density of the battery.

Documents CN114175371A and CN114759319A are disclosing electrochemical devices comprising an insulating member.

### SUMMARY

An objective of this application is to provide an electrochemical device and an electronic device to at least improve the production efficiency and energy density of the electrochemical device.

According to a first aspect of this application, an electrochemical device is provided, including a housing, an insulation assembly, and an electrode post. The housing defines an accommodation cavity and includes a first sidewall. The first sidewall includes a first wall face oriented toward the accommodation cavity and a second wall face oriented away from the accommodation cavity. The first sidewall includes a mounting hole that runs through the first wall face and the second wall face. The insulation assembly is snugly connected to the first wall face or the second wall face. The insulation assembly includes a first insulator. The first insulator includes a penetrative first through-hole. The first through-hole communicates with the mounting hole. The electrode post includes a first part and a second part. The first part is snugly connected to an end face of the insulation assembly, and the end face is oriented away from the first sidewall. The first part covers the first through-hole. The second part is disposed in the mounting hole and the first through-hole. One end of the second part is connected to an end face of the first part, and the end face is oriented toward the first sidewall.

The first insulator is able to be melted when a temperature in the accommodation cavity rises to a first threshold, and generate, under an action of a gas pressure in the accommodation cavity, a pressure relief channel that communicates the accommodation cavity to an outside of the housing.

In an embodiment of this application, the first insulator can be activated by a high temperature, so that the first insulator can bond the electrode post to the housing. The hermetic insulation function can be implemented under normal working conditions (that is, when the electrochemical device works normally). When the electrochemical device is thermally runaway, that is, when a temperature in an accommodation cavity rises to a first threshold, the gas in the accommodation cavity thermally expands, the first insulator is melted and generates, under an action of a gas pressure in the accommodation cavity, a pressure relief channel that communicates the accommodation cavity to the outside of the housing, so as to reduce the gas pressure in the accommodation cavity, and effectively prevent explosion of the electrochemical device caused by thermal runaway. In contrast to the conventional pressure relief groove or pressure relief hole structure, in this embodiment of this application, no additional operations such as laser drilling are required, and the manufacturing process is a simple and improves production efficiency of the electrochemical device. In addition, the insulation assembly serves functions of both insulation and pressure relief and avoids use of the components such as the pressure relief valve, thereby not only reducing the material cost, but also improving the energy density of the electrochemical device.

The insulation assembly further includes a second insulator. In a thickness direction of the first sidewall, the first insulator and the second insulator are stacked together. The second insulator includes a penetrative second through-hole. The second through-hole communicates with the first through-hole and the mounting hole. A melting point of the second insulator is higher than a first threshold.

When the temperature of the accommodation cavity rises to the first threshold, the first insulator melts while the second insulator remains in a solid form and is bonded to the housing or the electrode post. In addition, the second insulator is still bonded to the hot-melted first insulator to increase the overall strength of the insulation assembly, thereby improving the stability of bonding between the housing and the electrode post, and reducing overflow of the hot-melted first insulator.

According to some embodiments of this application, the insulation assembly further includes a third insulator. In the thickness direction of the first sidewall, the first insulator, the second insulator, and the third insulator are stacked together. The second insulator is disposed between the first insulator and the third insulator. The third insulator includes a penetrative third through-hole. The third through-hole communicates with the first through-hole, the second through-hole, and the mounting hole. A melting point of the third insulator is lower than the melting point of the second insulator.

Further, the melting points of the first insulator and the third insulator are 100 °C to 130 °C, and the melting point of the second insulator is 140 °C to 190 °C.

When the temperature of the accommodation cavity rises to the first threshold (100 °C to 130 °C), the first insulator and the third insulator melt to create a pressure relief channel to quickly expel the gas while the second insulator is still in a solid state. The second insulator is bonded between the hot-melted first and third insulators to improve the overall strength of the insulation assembly and reduce the overflow of the hot-melted first and third insulators.

According to some embodiments of this application, the electrochemical device further includes a connecting plate. The insulation assembly is connected to the first wall face or the second wall face of the housing through the connecting plate. The connecting plate includes a fourth through-hole. The fourth through-hole communicates with the mounting hole and the first through-hole.

The electrode post, the insulation assembly, and the connecting plate can be snugly connected outside the accommodation cavity (the electrode post, the insulation assembly, and the connecting plate form an electrode post insulation structure). The connection implemented by the connecting plate can easily improve the mounting precision of the insulation assembly and the electrode post on the housing. In addition, the connection between the electrode post insulation structure and the housing can be implemented separately. The electrode post insulation structure is also applicable to the housings of other electrochemical devices, thereby implementing the standardization and universal applicability of the electrode post insulation structure.

According to some embodiments of this application, the insulation assembly is bonded between the first part and the connecting plate by hot pressing. The hot-pressing bonding operation is convenient and fast, and improves the mounting efficiency.

According to some embodiments of this application, the insulation assembly is snugly connected to the first wall face. The second part includes a protruding portion oriented away from the first part. The protruding portion protrudes from the mounting hole. The protruding portion is located on a side of the first sidewall, and the side is oriented away from the accommodation cavity. The second part protrudes from the mounting hole, thereby facilitating conduction with an external circuit.

According to some embodiments of this application, the protruding portion is bent toward a direction parallel to the second wall face. By bending the protruding portion, the connection area between the second part and the external circuit is increased, and the stability of the connection between the external circuit and the second part is improved.

According to some embodiments of this application, viewed along a direction perpendicular to the first sidewall, the second part is located in a region of the first through-hole and the mounting hole. A first annular clearance exists between the second part and a wall of the mounting hole. A second annular clearance exists between the second part and a wall of the first through-hole. Both the first annular clearance and the second annular clearance are disposed around the second part. By disposing the first annular clearance and the second annular clearance, the gas can be expelled out of the housing through the first annular clearance and the second annular clearance when the electrochemical device is thermally runaway.

According to some embodiments of this application, the insulation assembly is snugly connected to the first wall face, a first blind hole is created on an end face of the second part, the end face is oriented away from the first part, and the first blind hole extends toward the first part. By disposing the first blind hole, it is convenient to connect an external circuit to the electrode post.

Alternatively, the insulation assembly is snugly connected to the second wall face, a second blind hole is created on an end face of the first part, the end face is oriented away from the second part, and the second blind hole extends toward the second part. By disposing the second blind hole, it is convenient to connect an external circuit to the electrode post.

According to some embodiments of this application, along a direction from the insulation assembly to the first sidewall, a thickness of the second insulator is 50% to 300% of a thickness of the first insulator, and the thickness of the second insulator is 50% to 300% of a thickness of the third insulator.

When the thickness of the second insulator is relatively large, the overall strength of the insulation assembly is higher. When the thicknesses of the first insulator and the third insulator are relatively large, it is easier to form a pressure relief channel to facilitate the expulsion of gas.

According to some embodiments of this application, the electrochemical device satisfies at least one of the following conditions:
along a direction from the insulation assembly to the first sidewall, a thickness of the insulation assembly is 0.05 mm to 1 mm;
along a direction from the insulation assembly to the first sidewall, a thickness of the first part is 0.1 mm to 2 mm, and a thickness of the second part is 0.1 mm to 1 mm; or along a thickness direction of the first sidewall in the insulation assembly, a thickness of the first sidewall is 0.05 mm to 0.5 mm.

Further, along the direction from the insulation assembly to the first sidewall, the thickness of the insulation assembly is 0.1 mm to 0.3 mm; along the direction from the insulation assembly to the first sidewall, the thickness of the first part is 0.1 mm to 0.5 mm, and the thickness of the second part is 0.1 mm to 0.3 mm; and, along a thickness direction of the first sidewall in the insulation assembly, the thickness of the first sidewall is 0.075 mm to 0.2 mm.

The thicknesses of the insulation assembly, the first part, and the second part are all relatively small, thereby reducing the space occupation, and increasing the energy density of the electrochemical device. The thickness of the first part is set to be greater than that of the second part, and the bonding part is the first part, so as to improve the stability of the bonding between the electrode post and the insulation assembly. The thickness of the electrode post is relatively small, and the insulation assembly falls within the thickness range specified above, so that the insulation assembly is strong enough to bond the electrode post to the first sidewall of the housing.

According to a second aspect, this application further provides an electronic device. The electronic device includes the electrochemical device according to any one of the embodiments of the first aspect.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings.
FIG. 1 is an exploded view of an electrochemical device according to some embodiments of this application;
FIG. 2 is a schematic diagram of connecting an insulation assembly and an electrode post to a housing according to some embodiments of this application;
FIG. 3 is a schematic diagram of connecting an insulation assembly and an electrode post to a first sidewall according to some embodiments of this application;
FIG. 4 is a schematic diagram of connecting an insulation assembly and an electrode post to a first sidewall according to some embodiments of this application;
FIG. 5 is a schematic diagram of connecting an insulation assembly and an electrode post to a first sidewall according to some embodiments of this application;
FIG. 6 is a schematic diagram of connecting an insulation assembly and an electrode post to a first sidewall according to some embodiments of this application;
FIG. 7 is a schematic diagram of connecting an insulation assembly and an electrode post to a first sidewall according to some embodiments of this application;
FIG. 8 is a schematic diagram of connecting an insulation assembly and an electrode post to a first sidewall according to some embodiments of this application;
FIG. 9 is a schematic diagram of connecting an insulation assembly and an electrode post to a first sidewall according to some embodiments of this application;
FIG. 10 is a schematic diagram of connecting an insulation assembly and an electrode post to a first sidewall according to some embodiments of this application;
FIG. 11 is a schematic diagram of connecting an insulation assembly and an electrode post to a first sidewall according to some embodiments of this application;
FIG. 12 is a schematic diagram of bending a protruding portion according to some embodiments of this application; and
FIG. 13 is a top view of an electrochemical device according to some embodiments of this application.

### List of reference numerals:

100. electrochemical device;
10. housing; 11. mounting hole; 12. accommodation cavity; 13. cover; 14. first sidewall;
141. first wall face; 142. second wall face;
20. insulation assembly; 21. first insulator; 211. first through-hole; 22. second insulator;
221. second through-hole; 23. third insulator; 231. third through-hole;
30. electrode post; 31. first part; 311. second blind hole; 32. second part; 321. protruding portion; 322. first blind hole;
40. electrode assembly;
50. connecting plate; 51. fourth through-hole;
60. first annular clearance; and
70. second annular clearance.

### DETAILED DESCRIPTION OF EMBODIMENTS

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. Unless otherwise defined, all technical and scientific terms used herein bear the same meanings as what is normally understood by a person skilled in the technical field of this application. The terms used in the specification of this application are merely intended to describe specific embodiments but not to limit this application.

In addition, to the extent that no mutual conflict occurs, the technical features described below in different embodiments of this application may be combined with each other.

In this specification, the meanings of "disposing" or "mounting" include fixing or confining an element or unit to a specific position or place by welding/soldering, screwing, snap-fit connection, bonding, or other means, where the element or unit may be held stationary in the specific position or place or may move within a limited range, and the element or unit may be detachable or undetachable after being fixed or confined to the specific position or place, without being limited in embodiments of this application.

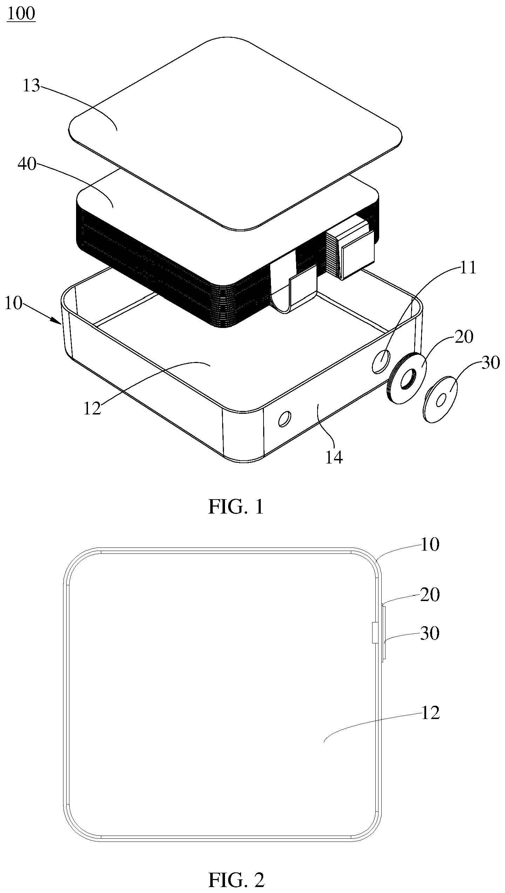

According to a first aspect, an embodiment of this application discloses an electrochemical device 100. Referring to FIG. 1, which shows an exploded view of the electrochemical device 100, the electrochemical device 100 includes a housing 10, an insulation assembly 20, and an electrode post 30. A mounting hole 11 is created on the housing 10. The electrode post 30 is disposed at the mounting hole 11. The electrode post 30 is configured to implement electrical conduction between the electrochemical device 100 and an external circuit. The insulation assembly 20 is configured to separate the electrode post 30 from the housing 10 so that the electrode post 30 is insulated from the housing 10. It is hereby noted that, in this embodiment of this application, the electrochemical device 100 is a smallest unit that makes up a battery or a battery module, and is a site for conversion between electrical energy and chemical energy.

With respect to the housing 10, referring to FIG. 1 to FIG. 3, the housing 10 defines an accommodation cavity 12. The electrochemical device 100 further includes an electrode assembly 40 and an electrolyte solution (not shown in the drawing). Both the electrode assembly 40 and the electrolyte solution may be accommodated in the accommodation cavity 12. The housing 10 includes a cover 13. The cover 13 fits on the top of the housing 10. After the electrode assembly 40 and the electrolyte solution are accommodated in the accommodation cavity 12, the housing 10 can be sealed by putting the cover 13 on. The housing 10 further includes a first sidewall 14. The first sidewall 14 is connected to the top cover. The first sidewall 14 includes a first wall face 141 and a second wall face 142. The first wall face 141 is disposed toward the accommodation cavity 12. The second wall face 142 is disposed away from the accommodation cavity 12. The mounting hole 11 is created on the first sidewall 14. The mounting hole 11 runs through the first wall face 141 and the second wall face 142.

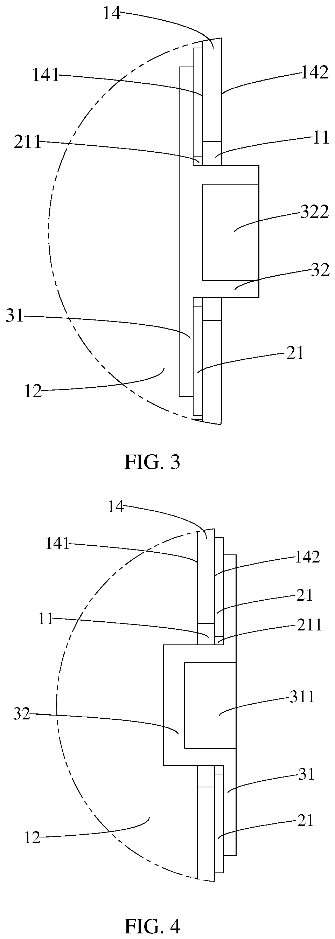

For the insulation assembly 20, referring to FIG. 1 to FIG. 4, the insulation assembly 20 is snugly connected to the first wall face 141 or the second wall face 142. The insulation assembly 20 is configured to isolate and insulate the electrode post 30 from the housing 10. The insulation assembly 20 includes a first insulator 21. The first insulator 21 may be snugly connected to the first wall face 141 or the second wall face 142. FIG. 3 shows a structure in which the first insulator 21 is connected to the first wall face 141, and FIG. 4 shows a structure in which the first insulator 21 is connected to the second wall face 142. A penetrative first through-hole 211 is created on the first insulator 21. The first through-hole 211 communicates with the mounting hole 11.

For the electrode post 30, in some embodiments, the housing 10 may be a metal housing 10. The metal housing 10 is electrically conductive. Therefore, the metal housing 10 may be used as a negative electrode of the electrochemical device 100, and a positive electrode may be dielectrically isolated from the metal housing 10 by insulating the electrode post 30. In this embodiment, the electrode post 30 is a lead-out piece of the positive electrode of the electrochemical device 100, and may be configured to implement electrical conduction between the positive electrode of the electrochemical device 100 and an external circuit. Understandably, in some other embodiments, the electrode post 30 may be used as a negative electrode instead, with the housing 10 serving as a positive electrode.

Referring to FIG. 1 to FIG. 4, the electrode post 30 includes a first part 31 and a second part 32 connected to each other. The first part 31 is snugly connected to an end face of the insulation assembly 20, the end face being away from the first sidewall 14. For example, the insulation assembly 20 includes a first insulator 21. The first insulator 21 is snugly connected to the first wall face 141, and the first part 31 of the electrode post 30 is snugly connected to the first insulator 21 in the accommodation cavity 12; or, the first insulator 21 is snugly connected to the second wall face 142, and the first part 31 of the electrode post 30 is snugly connected to the first insulator 21 outside the housing 10. The first part 31 covers the first through-hole 211 of the first insulator 21. One end of the second part 32 is connected to an end face of the first part 31, the end face being oriented toward the first sidewall 14. The other end of the second part 32 extends into the first through-hole 211 and the mounting hole 11.

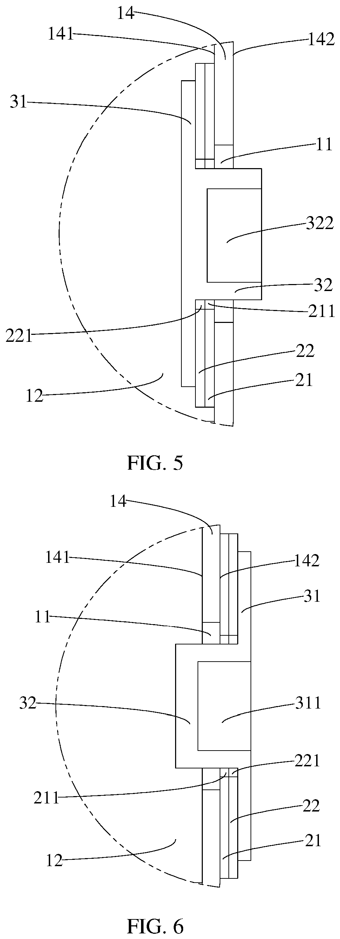

Referring to FIG. 5 and FIG. 6, the insulation assembly 20 further includes a second insulator 22. In a thickness direction of the first sidewall 14 (that is, in a direction from the first wall face 141 to the second wall face 142, or in a direction from the second wall face 142 to the first wall face 141), the first insulator 21 and the second insulator 22 are stacked together. A penetrative second through-hole 221 is created on the second insulator 22. The second through-hole 221 communicates with the first through-hole 211 and the mounting hole 11.

The first insulator 21 is snugly connected to the first wall face 141 or the second wall face 142. FIG. 5 shows a structure in which the first insulator 21 is snugly connected to the first wall face 141, and FIG. 6 shows a structure in which the first insulator 21 is snugly connected to the second wall face 142. The first part 31 of the electrode post 30 is snugly connected to the second insulator 22. Alternatively, the second insulator 22 is snugly connected to the first wall face 141 or the second wall face 142, and the first part 31 of the electrode post 30 is snugly connected to the first insulator 21. The second part 32 of the electrode post 30 extends into the first through-hole 211, the second through-hole 221, and the mounting hole 11. To facilitate the expulsion of gas, the wall of the first through-hole 211 and the wall of the second through-hole 221 is in a clearance from the first part 31. A clearance is necessary between the first part 31 and the wall of the mounting hole 11 to prevent a short circuit caused by direct contact between the first part 31 and the housing 10. In this embodiment, the melting point of the second insulator 22 is higher than the first threshold. When the temperature of the accommodation cavity 12 rises to the first threshold, the first insulator 21 melts, and the gas in the accommodation cavity 12 thermally expands. In this way, the gas pressure in the accommodation cavity 12 rises. Under the action of the high-pressure gas in the accommodation cavity 12, the melted first insulator 21 is burst by the gas to generate a pressure relief channel that communicates the accommodation cavity 12 to the outside of the housing 10, so as to reduce the gas pressure in the accommodation cavity 12. At this time, the second insulator 22 still remains in a solid form and is bonded to the housing 10 or the electrode post 30. In addition, the second insulator 22 is still bonded to the hot-melted first insulator 21 to increase the overall strength of the insulation assembly 20, thereby improving the stability of bonding between the housing 10 and the electrode post 30, and reducing overflow of the hot-melted first insulator 21.

It is hereby noted that, in some embodiments, when the first insulator 21 is snugly connected to the first wall face 141, the route of the gas is: flowing from the accommodation cavity 12, passing through the pressure relief channel, and then flowing out from the first through-hole 211 and the mounting hole 11. When the first insulator 21 is snugly connected to the second wall face 142, the route of the gas is: flowing from the accommodation cavity 12, passing through the mounting hole 11 and the first through-hole 211, and then flowing out from the pressure relief channel. When the second insulator 221 is snugly connected to the first wall face 141, the route of the gas is: flowing from the accommodation cavity 12, passing through the pressure relief channel, and then flowing out from the first through-hole 211, the second through-hole 221, and the mounting hole 11. When the second insulator 22 is snugly connected to the second wall face 142, the route of the gas is: flowing from the accommodation cavity 12, passing through the mounting hole 11, the second through-hole 221, and the first through-hole 211, and then flowing out from the pressure relief channel.

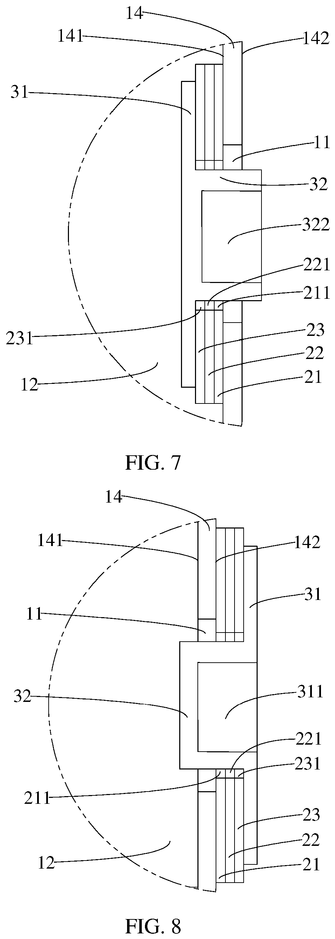

In some embodiments, referring to FIG. 7 and FIG. 8, the insulation assembly 20 further includes a third insulator 23. In the thickness direction of the first sidewall 14, the first insulator 21, the second insulator 22, and the third insulator 23 are stacked together. In addition, the second insulator 22 is disposed between the first insulator 21 and the third insulator 23. The third insulator 23 includes a penetrative third through-hole 231. The third through-hole 231 communicates with the first through-hole 211, the second through-hole 221, and the mounting hole 11. In this embodiment, the melting point of the third insulator 23 may be set to be the melting point of the first insulator 21, and the melting point of the second insulator 22 may be set to be higher than the melting point of the third insulator 23. Specifically, the melting points of the first insulator 21 and the third insulator 23 may be set to 100 °C to 130 °C, and the melting point of the second insulator 22 may be set to 140 °C to 190 °C. The first insulator 21, the second insulator 22, and the third insulator 23 may be made of a material selected from PP, LDPE, HDPE, LLDPE, OPP, PS, PVC, PET, PA, PF, or the like. For example, the first insulator 21 and the third insulator 23 are made of a low-melting PP (melting at 100 °C to 130 °C), and the second insulator 22 is made of a high-melting PP (melting at 140 °C to 190 °C). When the temperature of the accommodation cavity 12 rises to the first threshold (100 °C to 130 °C), the first insulator 21 and the third insulator 23 melt to create a pressure relief channel to quickly expel the gas while the second insulator 22 is still in a solid state. The second insulator 22 is bonded between the hot-melted first insulator 21 and third insulator 23 to improve the overall strength of the insulation assembly 20 and reduce the overflow of the hot-melted first insulator 21 and third insulator 23.

Optionally, along a direction from the insulation assembly 20 to the first sidewall 14, a thickness of the second insulator 22 is 50% to 300% of a thickness of the first insulator 21, and the thickness of the second insulator 22 is 50% to 300% of a thickness of the third insulator 23. When the thickness of the second insulator 22 is relatively large, the overall strength of the insulation assembly 20 is higher. When the thicknesses of the first insulator 21 and the third insulator 23 are relatively large, it is easier to form a pressure relief channel to facilitate the expulsion of gas.

Optionally, along the direction from the insulation assembly 20 to the first sidewall 14, the thickness of the insulation assembly 20 is 0.05 mm to 1 mm. Along the direction from the insulation assembly 20 to the first sidewall 14, the thickness of the first part 31 is 0.1 mm to 2 mm, and the thickness of the second part 32 is 0.1 mm to 1 mm. Along a thickness direction of the first sidewall 14 in the insulation assembly 20, the thickness of the first sidewall 14 is 0.05 mm to 0.5 mm. Further, the thickness of the insulation assembly 20 is preferably 0.1 mm to 0.3 mm. The thickness of the first part 31 is preferably 0.1 mm to 0.5 mm, and the thickness of the second part 32 is preferably 0.1 mm to 0.3 mm. The thickness of the first sidewall 14 is preferably 0.075 mm to 0.2 mm. The thicknesses of the insulation assembly 20, the first part 31, and the second part 32 are all relatively small, thereby reducing the space occupation, and increasing the energy density of the electrochemical device 100. The thickness of the first part 31 is generally set to be greater than that of the second part 32 to improve the stability of the bonding between the electrode post 30 and the insulation assembly 20. The thickness of the electrode post 30 is relatively small, and the insulation assembly 20 falls within the thickness range specified above, so that the insulation assembly 20 is strong enough to bond the electrode post 30 to the first sidewall 14 of the housing 10.

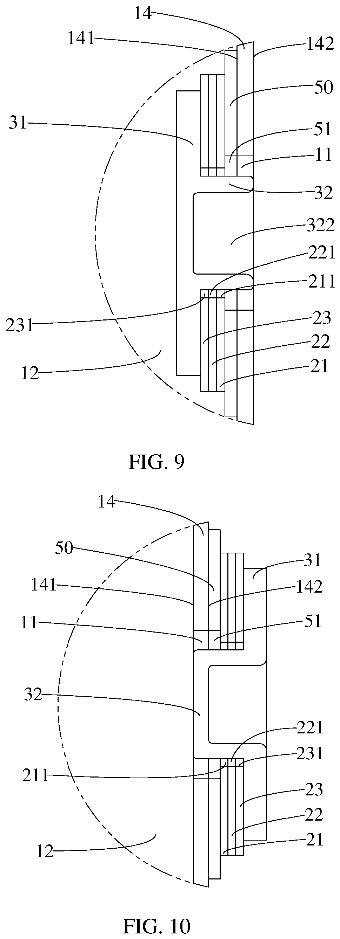

In some embodiments, referring to FIG. 1, FIG. 9, and FIG. 10, the electrochemical device 100 further includes a connecting plate 50. The insulation assembly 20 is connected to the first wall face 141 or the second wall face 142 of the housing 10 by the connecting plate 50. FIG. 9 shows a structure in which the connecting plate 50 is connected to the first wall face 141, and FIG. 10 shows a structure in which connecting plate is connected to the second wall face 142. Specifically, the connecting plate 50 includes a first end face (not shown in the drawing) and a second end face (not shown in the drawing) that are disposed opposite to each other. The insulation assembly 20 is connected to the first end face. The second end face is connected to the first wall face 141 or the second wall face 142 of the housing 10. A fourth through-hole 51 is created on the connecting plate 50. The fourth through-hole 51 communicates with the mounting hole 11 and the first through-hole 211. During mounting, the insulation assembly 20 is fitted and bonded to the connecting plate 50, and then the first part 31 of the electrode post 30 is directly snugly connected to a side of the insulation assembly 20, the side being away from the connecting plate 50. Finally, the connecting plate 50 is fixed to the first wall face 141 or the second wall face 142. The insulation assembly 20 may be bonded between the first part 31 and the connecting plate 50 by hot-pressing. The hot-pressing bonding operation is convenient and fast. During disassembling, the connecting plate 50 may be detached from the first sidewall 14 so that both the electrode post 30 and the insulation assembly 20 are detached from the first sidewall 14.

The electrode post 30, the insulation assembly 20, and the connecting plate 50 can be snugly connected outside the accommodation cavity 12 (the electrode post 30, the insulation assembly 20, and the connecting plate 50 form an electrode post insulation structure). The connection implemented by the connecting plate 50 can easily improve the mounting precision of the insulation assembly 20 and the electrode post 30 on the housing 10. In addition, the connection between the electrode post insulation structure and the housing 10 can be implemented separately. The electrode post insulation structure is also applicable to the housings 10 of other electrochemical devices 100, thereby implementing the standardization and universal applicability of the electrode post 30 insulation structure.

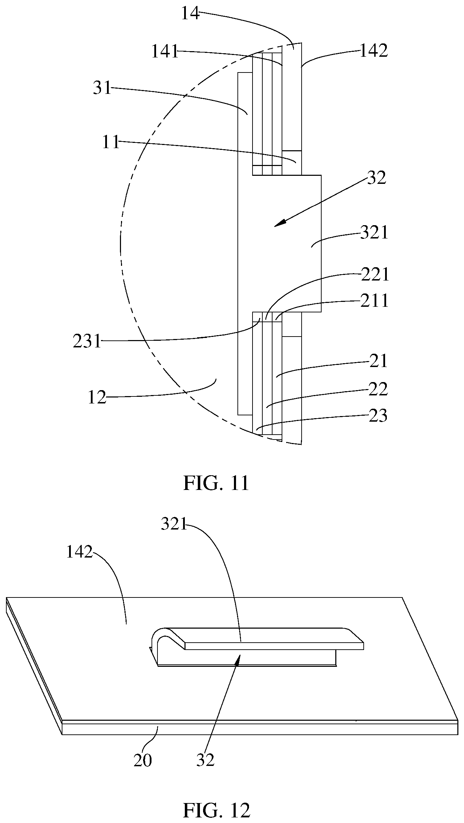

The electrode post 30 is configured to implement electrical conduction to an external circuit. In order to facilitate the conduction between the electrode post 30 and the external circuit, in some embodiments, referring to FIG. 11, the insulation assembly 20 is snugly connected to the first wall face 141. The second part 32 includes a protruding portion 321 oriented away from the first part 31. The protruding portion 321 protrudes from the mounting hole 11. The protruding portion 321 is located on a side of the first sidewall 14, the side being oriented away from the accommodation cavity 12. In other words, the second part 32 protrudes from the mounting hole 11, thereby facilitating conduction between the electrode post 30 and the external circuit.

Further, in some embodiments, referring to FIG. 12, the protruding portion 321 is bent toward a direction parallel to the second wall face 142. By bending the protruding portion 321, the connection area between the second part 32 and the external circuit is increased, and the stability of the connection between the external circuit and the second part 32 is improved.

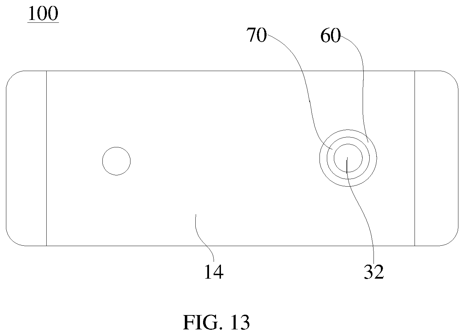

In some embodiments, referring to FIG. 13, viewed along a direction perpendicular to the first sidewall 14, the second part 32 is located in a region of the first through-hole 211 and the mounting hole 11. A first annular clearance 60 exists between the second part 32 and a wall of the mounting hole 11. A second annular clearance 70 exists between the second part 32 and a wall of the first through-hole 211. Both the first annular clearance 60 and the second annular clearance 70 are disposed around the second part 32. By disposing the first annular clearance 60 and the second annular clearance 70, the gas can be expelled out of the housing 10 through the first annular clearance 60 and the second annular clearance 70 when the electrochemical device 100 is thermally runaway. In addition, the first annular clearance 60 isolates the second part 32 from the housing 10 to prevent a short circuit caused by direct contact between the second part 32 and the housing 10.

In some embodiments, referring to FIG. 3, the insulation assembly 20 is snugly connected to the first wall face 141. The first part 31 is snugly connected to an end face of the insulation assembly 20, the end face being away from the first wall face 141. The second part 32 extends out of the housing 10. The second part 32 is exposed outside the housing 10. A first blind hole 322 is created on an end face of the second part 32, the end face being away from the first part 31. The first blind hole 322 extends toward the first part 31. The connection between the external circuit and the electrode post 30 is facilitated by the first blind hole 322. Alternatively,
referring to FIG. 3 and FIG. 4, the insulation assembly 20 is snugly connected to the second wall face 142. The first part 31 is snugly connected to an end face of the insulation assembly 20, the end face being away from the first wall face 141. The first part 31 is exposed outside the housing 10. The second part 32 extends into the accommodation cavity 12 of the housing 10. A second blind hole 311 is created on an end face of the first part 31, the end face being away from the second part 32. The second blind hole 311 extends toward the second part 32. The connection between the external circuit and the electrode post 30 is facilitated by the second blind hole 311.

In an embodiment of this application, the first insulator 21 can be activated by a high temperature, so that the first insulator 21 can bond the electrode post 30 to the housing 10. The hermetic insulation function can be implemented under normal working conditions (that is, when the electrochemical device 100 works normally). When the electrochemical device 100 is thermally runaway, that is, when a temperature in an accommodation cavity 12 rises to a first threshold, the gas in the accommodation cavity 12 thermally expands, the first insulator 21 is melted and generates, under an action of a gas pressure in the accommodation cavity 12, a pressure relief channel that communicates the accommodation cavity 12 to the outside of the housing 10, so as to reduce the gas pressure in the accommodation cavity 12, and effectively prevent explosion of the electrochemical device 100 caused by thermal runaway. In contrast to the conventional pressure relief groove or pressure relief hole structure, in this embodiment of this application, no additional operations such as laser drilling are required, and the manufacturing process is a simple and improves production efficiency of the electrochemical device 100. In addition, the insulation assembly 20 serves functions of both insulation and pressure relief and avoids use of the components such as the pressure relief valve, thereby not only reducing the material cost, but also improving the energy density of the electrochemical device 100.

An embodiment of this application further discloses an electronic device. The electronic device includes the electrochemical device 100 according to any one of the foregoing embodiments. The electronic device is not particularly limited in this application, and may be any electronic device known in the prior art. For example, the electronic device includes, but is not limited to, a Bluetooth headset, a mobile phone, a tablet, a notebook computer, an electric toy, an electric tool, an electric power cart, an electric vehicle, a ship, a spacecraft, and the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. An electrochemical device (100), the electrochemical device (100) comprises:
a housing (10), wherein the housing (10) defines an accommodation cavity (12), the housing (10) comprises a first sidewall (14), the first sidewall (14) comprises a first wall face (141) oriented toward the accommodation cavity (12) and a second wall face (142) oriented away from the accommodation cavity (12), and the first sidewall (14) comprises a mounting hole (11), the mounting hole (11) running through the first wall face (141) and the second wall face (142);
an insulation assembly (20), connected to the first wall face (141) or the second wall face (142); the insulation assembly (20) comprises a first insulator (21), the first insulator (21) comprises a penetrative first through-hole (211), and the first through-hole (211) communicates with the mounting hole (11);
an electrode post (30), comprising a first part (31) and a second part (32), the first part (31) is connected to an end face of the insulation assembly (20), the end face of the insulation assembly (20) is oriented away from the first sidewall (14), the first part (31) covers the first through-hole (211), the second part (32) is disposed in the mounting hole (11) and the first through-hole (211), one end of the second part (32) is connected to an end face of the first part (31), and the end face of the first part (31) is oriented toward the first sidewall (14); and
the first insulator (21) is configured to be melted when a temperature in the accommodation cavity (12) rises to a first threshold, and generate, under an action of a gas pressure in the accommodation cavity (12), a pressure relief channel that communicates the accommodation cavity (12) to an outside of the housing (10),
**characterized in that** the insulation assembly (20) further comprises a second insulator (22); in a thickness direction of the first sidewall (14), the first insulator (21) and the second insulator (22) are stacked together; the second insulator (22) comprises a penetrative second through-hole (221), the penetrative second through-hole (221) communicates with the first through-hole (211) and the mounting hole (11), and a melting point of the second insulator (22) is higher than the first threshold.

2. The electrochemical device (100) according to claim 1, **characterized in that** the insulation assembly (20) further comprises a third insulator (23); in the thickness direction of the first sidewall (14), the first insulator (21), the second insulator (22), and the third insulator (23) are stacked together; the second insulator (22) is disposed between the first insulator (21) and the third insulator (23); the third insulator (23) comprises a penetrative third through-hole (221); the penetrative third through-hole (221) communicates with the first through-hole (211), the penetrative second through-hole (221), and the mounting hole (11); and a melting point of the third insulator (23) is lower than the melting point of the second insulator (22).

3. The electrochemical device (100) according to claim 2, **characterized in that** the melting points of the first insulator (21) is in the range of 100 °C to 130 °C ,the melting point of the third insulator (23) is in the range of 100 °C to 130 °C, and the melting point of the second insulator (22) is in the range of 140 °C to 190 °C.

4. The electrochemical device (100) according to any one of claims 1 to 3, **characterized in that** the electrochemical device (100) further comprises a connecting plate (50), the insulation assembly (20) is connected to the first wall face (141) or the second wall face (142) of the housing (10) through the connecting plate (50), the connecting plate (50) comprises a fourth through-hole (51), and the fourth through-hole (51) communicates with the mounting hole (11) and the first through-hole (211).

5. The electrochemical device (100) according to claim 4, **characterized in that** the insulation assembly (20) is bonded between the first part (31) and the connecting plate (50) by hot pressing.

6. The electrochemical device (100) according to any one of claims 1 to 5, **characterized in that** the insulation assembly (20) is connected to the first wall face (141), the second part (32) comprises a protruding portion (321) oriented away from the first part (31), the protruding portion (321) protrudes from the mounting hole (11), the protruding portion (321) is located on a side of the first sidewall (14), and the side of the first sidewall is oriented away from the accommodation cavity (12).

7. The electrochemical device (100) according to claim 6, **characterized in that** the protruding portion (321) is bent toward a direction parallel to the second wall face (142).

8. The electrochemical device (100) according to any one of claims 1 to 3, **characterized in that**, viewed along a direction perpendicular to the first sidewall (14), the second part (32) is located in a region of the first through-hole (211) and the mounting hole (11), a first annular clearance (60) is provided between the second part (32) and a wall of the mounting hole (11), a second annular clearance (60) is provided between the second part (32) and a wall of the first through-hole (211), and both the first annular clearance (60) and the second annular clearance (60) are disposed around the second part (32).

9. The electrochemical device (100) according to claim 8, **characterized in that** the insulation assembly (20) is connected to the first wall face (141), a first blind hole (322) is created on an end face of the second part (32), the end face of the second part (32) is oriented away from the first part (31), and the first blind hole (322) extends toward the first part (31); or
the insulation assembly (20) is connected to the second wall face (142), a second blind hole (311) is created on an end face of the first part (31), the end face of the first part (31) is oriented away from the second part (32), and the second blind hole (311) extends toward the second part (32).

10. The electrochemical device (100) according to claim 2, **characterized in that**, along a direction from the insulation assembly (20) to the first sidewall (14), a thickness of the second insulator (22) is 50% to 300% of a thickness of the first insulator (21), and the thickness of the second insulator (22) is 50% to 300% of a thickness of the third insulator (23).

11. The electrochemical device (100) according to claim 1, **characterized in that** the electrochemical device (100) satisfies at least one of the following conditions:
along a direction from the insulation assembly (20) to the first sidewall (14), a thickness of the insulation assembly (20) is 0.05 mm to 1 mm;
along a direction from the insulation assembly (20) to the first sidewall (14), a thickness of the first part (31) is 0.1 mm to 2 mm, and a thickness of the second part (32) is 0.1 mm to 1 mm; or
along a thickness direction of the first sidewall (14) in the insulation assembly(20), a thickness of the first sidewall (14) is 0.05 mm to 0.5 mm.

12. The electrochemical device (100) according to claim 11, **characterized in that**
along the direction from the insulation assembly (20) to the first sidewall (14), the thickness of the insulation assembly (20) is 0.1 mm to 0.3 mm;
along the direction from the insulation assembly (20) to the first sidewall (14), the thickness of the first part (31) is 0.1 mm to 0.5 mm, and the thickness of the second part (32) is 0.1 mm to 0.3 mm; or
along a thickness direction of the first sidewall (14) in the insulation assembly (20), the thickness of the first sidewall (14) is 0.075 mm to 0.2 mm.

13. An electronic device, **characterized in that** the electronic device comprises the electrochemical device (100) according to any one of claims 1 to 12.

## Patentansprüche

1. Elektrochemische Vorrichtung (100), wobei die elektrochemische Vorrichtung (100) umfasst:
ein Gehäuse (10), wobei das Gehäuse (10) einen Aufnahmehohlraum (12) definiert, das Gehäuse (10) eine erste Seitenwand (14) umfasst, die erste Seitenwand (14) eine erste Wandfläche (141), die in Richtung des Aufnahmehohlraums (12) ausgerichtet ist, und eine zweite Wandfläche (142) umfasst, die von dem Aufnahmehohlraum (12) weg ausgerichtet ist, und die erste Seitenwand (14) ein Montageloch (11) umfasst, wobei das Montageloch (11) durch die erste Wandfläche (141) und die zweite Wandfläche (142) verläuft;
eine Isolieranordnung (20), die mit der ersten Wandfläche (141) oder der zweiten Wandfläche (142) verbunden ist; wobei die Isolieranordnung (20) einen ersten Isolator (21) umfasst, der erste Isolator (21) ein durchdringendes erstes Durchgangsloch (211) umfasst, und das erste Durchgangsloch (211) mit dem Montageloch (11) kommuniziert;
einen Elektrodenpfosten (30), der einen ersten Teil (31) und einen zweiten Teil (32) umfasst, wobei der erste Teil (31) mit einer Stirnfläche der Isolieranordnung (20) verbunden ist, die Stirnfläche der Isolieranordnung (20) von der ersten Seitenwand (14) weg ausgerichtet ist, der erste Teil (31) das erste Durchgangsloch (211) abdeckt, der zweite Teil (32) in dem Montageloch (11) und dem ersten Durchgangsloch (211) angeordnet ist, ein Ende des zweiten Teils (32) mit einer Stirnfläche des ersten Teils (31) verbunden ist, und die Stirnfläche des ersten Teils (31) in Richtung der ersten Seitenwand (14) ausgerichtet ist; und
der erste Isolator (21) so ausgestaltet ist, dass er geschmolzen wird, wenn eine Temperatur im Aufnahmehohlraum (12) auf eine erste Schwelle ansteigt, und unter Einwirkung eines Gasdrucks im Aufnahmehohlraum (12) einen Druckentlastungskanal erzeugt, der den Aufnahmehohlraum (12) mit einer Außenseite des Gehäuses (10) in Kommunikation bringt,
**dadurch gekennzeichnet, dass** die Isolieranordnung (20) weiter einen zweiten Isolator (22) umfasst; in einer Dickenrichtung der ersten Seitenwand (14) der erste Isolator (21) und der zweite Isolator (22) zusammen gestapelt sind; der zweite Isolator (22) ein durchdringendes zweites Durchgangsloch (221) umfasst, das durchdringende zweite Durchgangsloch (221) mit dem ersten Durchgangsloch (211) und dem Montageloch (11) kommuniziert, und ein Schmelzpunkt des zweiten Isolators (22) höher ist als die erste Schwelle.

2. Elektrochemische Vorrichtung (100) nach Anspruch 1, **dadurch gekennzeichnet, dass** die Isolieranordnung (20) weiter einen dritten Isolator (23) umfasst; in der Dickenrichtung der ersten Seitenwand (14) der erste Isolator (21), der zweite Isolator (22) und der dritte Isolator (23) zusammen gestapelt sind; der zweite Isolator (22) zwischen dem ersten Isolator (21) und dem dritten Isolator (23) angeordnet ist; der dritte Isolator (23) ein durchdringendes drittes Durchgangsloch (221) umfasst; das durchdringende dritte Durchgangsloch (221) mit dem ersten Durchgangsloch (211), dem durchdringenden zweiten Durchgangsloch (221) und dem Montageloch (11) kommuniziert; und ein Schmelzpunkt des dritten Isolators (23) niedriger ist als der Schmelzpunkt des zweiten Isolators (22).

3. Elektrochemische Vorrichtung (100) nach Anspruch 2, **dadurch gekennzeichnet, dass** die Schmelzpunkte des ersten Isolators (21) im Bereich von 100 °C bis 130 °C liegen, der Schmelzpunkt des dritten Isolators (23) im Bereich von 100 °C bis 130 °C liegt und der Schmelzpunkt des zweiten Isolators (22) im Bereich von 140 °C bis 190 °C liegt.

4. Elektrochemische Vorrichtung (100) nach einem der Ansprüche 1 bis 3, **dadurch gekennzeichnet, dass** die elektrochemische Vorrichtung (100) weiter eine Verbindungsplatte (50) umfasst, die Isolieranordnung (20) durch die Verbindungsplatte (50) mit der ersten Wandfläche (141) oder der zweiten Wandfläche (142) des Gehäuses (10) verbunden ist, die Verbindungsplatte (50) ein viertes Durchgangsloch (51) umfasst, und das vierte Durchgangsloch (51) mit dem Montageloch (11) und dem ersten Durchgangsloch (211) kommuniziert.

5. Elektrochemische Vorrichtung (100) nach Anspruch 4, **dadurch gekennzeichnet, dass** die Isolieranordnung (20) zwischen dem ersten Teil (31) und der Verbindungsplatte (50) durch Heißpressen verklebt ist.

6. Elektrochemische Vorrichtung (100) nach einem der Ansprüche 1 bis 5, **dadurch gekennzeichnet, dass** die Isolieranordnung (20) mit der ersten Wandfläche (141) verbunden ist, der zweite Teil (32) einen vorspringenden Abschnitt (321) umfasst, der vom ersten Teil (31) weg ausgerichtet ist, der vorspringende Abschnitt (321) aus dem Montageloch (11) vorspringt, der vorspringende Abschnitt (321) sich auf einer Seite der ersten Seitenwand (14) befindet, und die Seite der ersten Seitenwand vom Aufnahmehohlraum (12) weg ausgerichtet ist.

7. Elektrochemische Vorrichtung (100) nach Anspruch 6, **dadurch gekennzeichnet, dass** der vorspringende Abschnitt (321) in eine Richtung parallel zur zweiten Wandfläche (142) gebogen ist.

8. Elektrochemische Vorrichtung (100) nach einem der Ansprüche 1 bis 3, **dadurch gekennzeichnet, dass**, entlang einer Richtung senkrecht zur ersten Seitenwand (14) gesehen, der zweite Teil (32) sich in einem Bereich des ersten Durchgangslochs (211) und des Montagelochs (11) befindet, ein erster ringförmiger Spalt (60) zwischen dem zweiten Teil (32) und einer Wand des Montagelochs (11) vorgesehen ist, ein zweiter ringförmiger Spalt (60) zwischen dem zweiten Teil (32) und einer Wand des ersten Durchgangslochs (211) vorgesehen ist, und sowohl der erste ringförmige Spalt (60) als auch der zweite ringförmige Spalt (60) um den zweiten Teil (32) herum angeordnet sind.

9. Elektrochemische Vorrichtung (100) nach Anspruch 8, **dadurch gekennzeichnet, dass** die Isolieranordnung (20) mit der ersten Wandfläche (141) verbunden ist, ein erstes Blindloch (322) an einer Stirnfläche des zweiten Teils (32) erzeugt ist, die Stirnfläche des zweiten Teils (32) vom ersten Teil (31) weg ausgerichtet ist und sich das erste Blindloch (322) in Richtung des ersten Teils (31) erstreckt; oder
die Isolieranordnung (20) mit der zweiten Wandfläche (142) verbunden ist, ein zweites Blindloch (311) an einer Stirnfläche des ersten Teils (31) erzeugt ist, die Stirnfläche des ersten Teils (31) vom zweiten Teil (32) weg ausgerichtet ist und sich das zweite Blindloch (311) in Richtung des zweiten Teils (32) erstreckt.

10. Elektrochemische Vorrichtung (100) nach Anspruch 2, **dadurch gekennzeichnet, dass** entlang einer Richtung von der Isolieranordnung (20) zur ersten Seitenwand (14) eine Dicke des zweiten Isolators (22) 50 % bis 300 % einer Dicke des ersten Isolators (21) beträgt und die Dicke des zweiten Isolators (22) 50 % bis 300 % einer Dicke des dritten Isolators (23) beträgt.

11. Elektrochemische Vorrichtung (100) nach Anspruch 1, **dadurch gekennzeichnet, dass** die elektrochemische Vorrichtung (100) mindestens eine der folgenden Bedingungen erfüllt:
entlang einer Richtung von der Isolieranordnung (20) zur ersten Seitenwand (14) beträgt eine Dicke der Isolieranordnung (20) 0,05 mm bis 1 mm;
entlang einer Richtung von der Isolieranordnung (20) zur ersten Seitenwand (14) beträgt eine Dicke des ersten Teils (31) 0,1 mm bis 2 mm und eine Dicke des zweiten Teils (32) 0,1 mm bis 1 mm; oder
entlang einer Dickenrichtung der ersten Seitenwand (14) in der Isolieranordnung (20) beträgt eine Dicke der ersten Seitenwand (14) 0,05 mm bis 0,5 mm.

12. Elektrochemische Vorrichtung (100) nach Anspruch 11, **dadurch gekennzeichnet, dass**
entlang der Richtung von der Isolieranordnung (20) zur ersten Seitenwand (14) die Dicke der Isolieranordnung (20) 0,1 mm bis 0,3 mm beträgt;
entlang der Richtung von der Isolieranordnung (20) zur ersten Seitenwand (14) die Dicke des ersten Teils (31) 0,1 mm bis 0,5 mm beträgt und die Dicke des zweiten Teils (32) 0,1 mm bis 0,3 mm beträgt; oder
entlang einer Dickenrichtung der ersten Seitenwand (14) in der Isolieranordnung (20) die Dicke der ersten Seitenwand (14) 0,075 mm bis 0,2 mm beträgt.

13. Elektronische Vorrichtung, **dadurch gekennzeichnet, dass** die elektronische Vorrichtung die elektrochemische Vorrichtung (100) nach einem der Ansprüche 1 bis 12 umfasst.

## Revendications

1. Dispositif électrochimique (100), le dispositif électrochimique (100) comprend :
un boîtier (10), dans lequel le boîtier (10) définit une cavité de logement (12), le boîtier (10) comprend une première paroi latérale (14), la première paroi latérale (14) comprend une première face de paroi (141) orientée vers la cavité de logement (12) et une seconde face de paroi (142) orientée à l'opposé de la cavité de logement (12), et la première paroi latérale (14) comprend un trou de montage (11), le trou de montage (11) traversant la première face de paroi (141) et la seconde face de paroi (142) ;
un ensemble d'isolation (20), connecté à la première face de paroi (141) ou à la seconde face de paroi (142) ; l'ensemble d'isolation (20) comprend un premier isolant (21), le premier isolant (21) comprend un premier trou traversant pénétrant (211), et le premier trou traversant (211) communique avec le trou de montage (11) ;
une tige d'électrode (30), comprenant une première partie (31) et une seconde partie (32), la première partie (31) étant reliée à une face d'extrémité de l'ensemble isolant (20), la face d'extrémité de l'ensemble isolant (20) étant orientée à l'opposé de la première paroi latérale (14), la première partie (31) recouvrant le premier trou traversant (211), la seconde partie (32) étant disposée dans le trou de montage (11) et le premier trou traversant (211), une extrémité de la seconde partie (32) étant reliée à une face d'extrémité de la première partie (31), et la face d'extrémité de la première partie (31) étant orientée vers la première paroi latérale (14) ; et
le premier isolant (21) est configuré pour être fondu lorsqu'une température dans la cavité d'hébergement (12) s'élève à un premier seuil, et générer, sous l'action d'une pression de gaz dans la cavité d'hébergement (12), un canal de décharge de pression qui communique la cavité d'hébergement (12) avec l'extérieur du boîtier (10),
**caractérisé en ce que** l'ensemble isolant (20) comprend en outre un second isolant (22) ; dans le sens de l'épaisseur de la première paroi latérale (14), le premier isolant (21) et le second isolant (22) sont empilés ensemble ; le second isolant (22) comprend un second trou traversant pénétrant (221), le second trou traversant pénétrant (221) communique avec le premier trou traversant (211) et le trou de montage (11), et un point de fusion du second isolant (22) est supérieur au premier seuil.

2. Dispositif électrochimique (100) selon la revendication 1, **caractérisé en ce que** l'ensemble isolant (20) comprend en outre un troisième isolant (23) ; dans le sens de l'épaisseur de la première paroi latérale (14), le premier isolant (21), le deuxième isolant (22) et le troisième isolant (23) sont empilés ; le deuxième isolant (22) est disposé entre le premier isolant (21) et le troisième isolant (23) ; le troisième isolant (23) comprend un troisième trou traversant pénétrant (221) ; ce troisième trou traversant pénétrant (221) communique avec le premier trou traversant (211), le deuxième trou traversant pénétrant (221) et le trou de montage (11) ; et le point de fusion du troisième isolant (23) est inférieur au point de fusion du deuxième isolant (22).

3. Dispositif électrochimique (100) selon la revendication 2, **caractérisé en ce que** les points de fusion du premier isolant (21) sont dans la plage de 100 °C à 130 °C, le point de fusion du troisième isolant (23) est dans la plage de 100 °C à 130 °C, et le point de fusion du deuxième isolant (22) est dans la plage de 140 °C à 190 °C.

4. Dispositif électrochimique (100) selon l'une quelconque des revendications 1 à 3, **caractérisé en ce que** le dispositif électrochimique (100) comprend en outre une plaque de connexion (50), l'ensemble d'isolation (20) est connecté à la première face de paroi (141) ou à la deuxième face de paroi (142) du boîtier (10) par l'intermédiaire de la plaque de connexion (50), la plaque de connexion (50) comprend un quatrième trou traversant (51), et le quatrième trou traversant (51) communique avec le trou de montage (11) et le premier trou traversant (211).

5. Dispositif électrochimique (100) selon la revendication 4, **caractérisé en ce que** l'ensemble isolant (20) est collé entre la première partie (31) et la plaque de connexion (50) par pressage à chaud.

6. Dispositif électrochimique (100) selon l'une quelconque des revendications 1 à 5, **caractérisé en ce que** l'ensemble d'isolation (20) est connecté à la première face de paroi (141), la deuxième partie (32) comprend une partie saillante (321) orientée à l'opposé de la première partie (31), la partie saillante (321) fait saillie à partir du trou de montage (11), la partie saillante (321) est située sur un côté de la première paroi latérale (14), et le côté de la première paroi latérale est orienté à l'opposé de la cavité de logement (12).

7. Dispositif électrochimique (100) selon la revendication 6, **caractérisé en ce que** la partie saillante (321) est courbée vers une direction parallèle à la deuxième face de paroi (142).

8. Dispositif électrochimique (100) selon l'une quelconque des revendications 1 à 3, **caractérisé en ce que**, vue selon une direction perpendiculaire à la première paroi latérale (14), la deuxième partie (32) est située dans une région du premier trou traversant (211) et du trou de montage (11), un premier jeu annulaire (60) est ménagé entre la deuxième partie (32) et une paroi du trou de montage (11), un deuxième jeu annulaire (60) est ménagé entre la deuxième partie (32) et une paroi du premier trou traversant (211), et le premier jeu annulaire (60) et le deuxième jeu annulaire (60) sont tous deux disposés autour de la deuxième partie (32).

9. Dispositif électrochimique (100) selon la revendication 8, **caractérisé en ce que** l'ensemble isolant (20) est relié à la première face de paroi (141), un premier trou borgne (322) est créé sur une face d'extrémité de la seconde partie (32), la face d'extrémité de la seconde partie (32) est orientée à l'opposé de la première partie (31), et le premier trou borgne (322) s'étend vers la première partie (31) ; ou
l'ensemble isolant (20) est relié à la seconde face de paroi (142), un second trou borgne (311) est créé sur une face d'extrémité de la première partie (31), la face d'extrémité de la première partie (31) est orientée à l'opposé de la seconde partie (32), et le second trou borgne (311) s'étend vers la seconde partie (32).

10. Dispositif électrochimique (100) selon la revendication 2, **caractérisé en ce que**, le long d'une direction allant de l'ensemble isolant (20) à la première paroi latérale (14), une épaisseur du deuxième isolant (22) est de 50 % à 300 % d'une épaisseur du premier isolant (21), et l'épaisseur du deuxième isolant (22) est de 50 % à 300 % d'une épaisseur du troisième isolant (23).

11. Dispositif électrochimique (100) selon la revendication 1, **caractérisé en ce qu'**il satisfait au moins l'une des conditions suivantes :
le long d'une direction allant de l'ensemble isolant (20) à la première paroi latérale (14), une épaisseur de l'ensemble isolant (20) est de 0,05 mm à 1 mm ;
le long d'une direction allant de l'ensemble isolant (20) à la première paroi latérale (14), une épaisseur de la première partie (31) est de 0,1 mm à 2 mm, et une épaisseur de la seconde partie (32) est de 0,1 mm à 1 mm ; ou
le long d'une direction d'épaisseur de la première paroi latérale (14) dans l'ensemble d'isolation (20), une épaisseur de la première paroi latérale (14) est de 0,05 mm à 0,5 mm.

12. Dispositif électrochimique (100) selon la revendication 11, **caractérisé en ce que** le long de la direction allant de l'ensemble isolant (20) à la première paroi latérale (14), l'épaisseur de l'ensemble isolant (20) est de 0,1 mm à 0,3 mm ;
dans la direction allant de l'ensemble isolant (20) à la première paroi latérale (14), l'épaisseur de la première partie (31) est de 0,1 mm à 0,5 mm, et l'épaisseur de la seconde partie (32) est de 0,1 mm à 0,3 mm ; ou
le long d'une direction d'épaisseur de la première paroi latérale (14) dans l'ensemble d'isolation (20), l'épaisseur de la première paroi latérale (14) est de 0,075 mm à 0,2 mm.

13. Dispositif électronique, **caractérisé en ce que** le dispositif électronique comprend le dispositif électrochimique (100) selon l'une quelconque des revendications 1 à 12.
